# EUROPÄISCHE PATENTSCHRIFT

(11) **EP 3 195 258 B1**
(45) Veröffentlichungstag und Bekanntmachung des Hinweises auf die Patenterteilung: **09.09.2020**
(21) Anmeldenummer: 15778622.9
(22) Anmeldetag: 17.09.2015
(51) Int. Cl.: G06T 19/20, G01N 23/046, G06T 7/00

(54) **VERFAHREN UND SYSTEM ZUR BESTIMMUNG DER LOKALEN QUALITÄT VON AUS VOLUMENDATEN EXTRAHIERTEN OBERFLÄCHENDATEN**
METHOD AND SYSTEM FOR DETERMINING THE LOCAL QUALITY OF SURFACE DATA EXTRACTED FROM VOLUME DATA
PROCÉDÉ ET SYSTÈME DE DÉTERMINATION DE LA QUALITÉ LOCALE DE DONNÉES DE SURFACE EXTRAITES DE DONNÉES DE VOLUME

(30) Priorität: 17.09.2014 DE 102014218691; 26.01.2015 DE 102015201271
(43) Veröffentlichungstag der Anmeldung: 26.07.2017
(73) Patentinhaber: Volume Graphics GmbH, 69115 Heidelberg (DE)
(72) Erfinder: FLESSNER, Matthias, 91058 Erlangen (DE); HAUSOTTE, Tino, 91052 Erlangen (DE)
(74) Vertreter: Patentanwälte Olbricht Buchhold Keulertz
(86) Internationale Anmeldenummer: PCT/EP2015/071377
(87) Internationale Veröffentlichungsnummer: WO 2016/042105

(56) Entgegenhaltungen:
- WO-A1-2012/160511
- DE-A1-102005 012 094
- REDA FITSUM A ET AL: "An artifact-robust, shape library-based algorithm for automatic segmentation of inner ear anatomy in post-cochlear-implantation CT", PROGRESS IN BIOMEDICAL OPTICS AND IMAGING, SPIE - INTERNATIONAL SOCIETY FOR OPTICAL ENGINEERING, BELLINGHAM, WA, US, Bd. 9034, 21. März 2014 (2014-03-21), Seiten 90342V-90342V, XP060031772, ISSN: 1605-7422, DOI: 10.1117/12.2043260
- KRUMM ET AL: "Reducing non-linear artifacts of multi-material objects in industrial 3D computed tomography", NDT & E INTERNATIONAL, BUTTERWORTH-HEINEMANN, OXFORD, GB, Bd. 41, Nr. 4, 18. Januar 2008 (2008-01-18), Seiten 242-251, XP022540498, ISSN: 0963-8695
- OHTAKE YUTAKA ET AL: "Edge detection based multi-material interface extraction on industrial CT volumes", SCIENCE CHINA INFORMATION SCIENCES, SCIENCE CHINA PRESS, HEIDELBERG, Bd. 56, Nr. 9, 10. September 2013 (2013-09-10), Seiten 1-9, XP035311218, ISSN: 1674-733X, DOI: 10.1007/S11432-013-4987-2 [gefunden am 2013-09-10]
- FLESSNER M: "Evaluating and visualization of the quality of surface points determined from computed tomography volume data", PTB, PHYSIKALISCH-TECHNISCHE BUNDESANSTALT , 1 January 2015 (2015-01-01), pages 1-8, XP009514137, DOI: 10.7795/810.20150223A Retrieved from the Internet: URL:https://oar.ptb.de/files/download/56d6 a9f0ab9f3f76468b464e [retrieved on 2019-06-28]
- Fleßner, Matthias; Müller, Andreas; Helmecke, Eric; Hausotte, Tino: "Evaluating and visualizing the quality of surface points determined from computed tomography volume data", , 1 January 2015 (2015-01-01), Retrieved from the Internet: URL:https://oar.ptb.de/resources/show/10.7 795/810.20150223A [retrieved on 2019-06-28]

## Beschreibung

Die Erfindung bezieht sich auf ein Verfahren zur Bestimmung der lokalen Qualität von Oberflächendaten, die aus (insbesondere mittels Computertomographie) gewonnenen Volumendaten extrahiert werden. Die Erfindung bezieht sich des Weiteren auf ein System zur Durchführung des Verfahrens.

Die industrielle Röntgen-Computertomographie ermöglicht es, zerstörungsfrei und berührungslos ein technisches Objekt (inklusive innerer Strukturen) zu erfassen. Dabei wird das Objekt aus verschiedenen Richtungen mit Röntgenstrahlung durchstrahlt, wobei jeweils 2D-Projektionen des Objekts aufgenommen werden. Aus den 2D-Projektionen wird ein 3D-Bilddatensatz (Volumendatensatz) rekonstruiert. Ein solcher Volumendatensatz besteht aus einer dreidimensionalen Matrix von Voxeln (quaderförmigen Volumenelementen), wobei jedem Voxel ein Grauwert zugeordnet ist. Dieser Grauwert repräsentiert den lokalen Röntgenabsorptionskoeffizienten des Objekts an dem dem Volumenelement zugeordneten Raumpunkt.

Entsprechende Volumendatensätze werden auch mittels anderer tomographischer Methoden erzeugt, z. B. mittels Magnetresonanztomographie oder Ultraschalltomographie.

Zur Visualisierung und Untersuchung des aufgenommenen Volumens werden aus der dreidimensionalen Bildinformation (also der räumlichen Verteilung der Grauwerte) des Volumendatensatzes in der Regel zweidimensionale Schnittbilder abgeleitet und auf einem Bildschirm angezeigt. Für eine verbesserte Visualisierung oder sonstige Weiterverarbeitung der Daten (beispielsweise für eine Verwendung in der dimensionellen Messtechnik, einem Soll-Ist-Vergleich mit CAD-Daten, einer Defektanalyse oder als Input für eine FEM-Simulation) kann es allerdings wünschenswert sein, die Oberfläche des abgebildeten Objekts aus den Volumendaten zu bestimmen. Die Oberfläche ist dabei durch das Ensemble derjenigen Raumpunkte gegeben, die die Grenzfläche zwischen dem materialgefüllten Raumvolumen des Objekts und der leeren oder luftgefüllten Umgebung oder die Grenzfläche zwischen Teilvolumina aus unterschiedlichem Material definieren. Bei komplexen Objekten kann die zu bestimmende Oberfläche aus mehreren, untereinander verbundenen oder unverbundenen Teilflächen bestehen und so z. B. zusätzlich zu einer Außenfläche eine oder mehrere Innenflächen und/oder Materialgrenzen umfassen.

Es gibt verschiedene an sich bekannte (Oberflächenbestimmungs-)Methoden, mittels welcher diese Oberfläche aus einem Volumendatensatz bestimmt werden kann, beispielsweise
- den sogenannten "Marching Cubes"-Algorithmus (Iso-Surface), wie er beispielsweise in William E. Lorensen, Harvey E. Cline: "Marching Cubes: A High Resolution 3D Surface Construction Algorithm". In: Computer Graphics, Volume 21, Number 4, July 1987 beschrieben ist,
- die Verwendung eines lokal adaptiven Schwellwertes, wie sie beispielsweise in EP 1 861 822 A1 beschrieben ist, oder
- den sogenannten "3D Otsu's Thresholding"-Algorithmus, wie er beispielsweise in Nobuyuki Otsu: "A Threshold Selection Method from Gray-Level Histograms". In: IEEE TRANSACTIONS ON SYSTEMS, MAN, AND CYBERNETICS, VOL. SMC-9, NO. 1, JANUARY 1979 beschrieben ist.

Teilweise arbeiten diese Verfahren iterativ, d. h. sie starten mit einem groben Schätzwert für die zu bestimmende Oberfläche und nähern diesen Schätzwert Schritt für Schritt einer möglichst korrekten Oberfläche an.

Durch die Oberfläche des aufgenommen Objekts wird bei computertomographisch erzeugten Volumendaten in jedem Fall (also unabhängig davon, ob durch die Oberfläche ein materialgefüllter Raumbereich von luftgefülltem oder luftleerem Raum abgegrenzt wird oder ob zwei verschiedene Materialien voneinander abgegrenzt werden) ein in stärkerem Ausmaß strahlungsabsorbierender Raumbereich ("hochabsorbierender Bereich") von einem in geringerem Ausmaß strahlungsabsorbierenden Raumbereich ("niederabsorbierender Bereich") getrennt.

Dieser Übergang äußert sich in den Volumendaten stets in einem mehr oder weniger scharfen, flächig ausgedehnten Kontrast. Mit anderen Worten zeichnet sich die zu bestimmende Oberfläche in den Volumendaten dadurch aus, dass die Voxel entlang der zu bestimmenden Oberfläche keine oder eine nur vergleichsweise geringe räumliche Grauwertfluktuation aufweisen, während in der Umgebung eines jeden Raumpunktes der Oberfläche senkrecht zu ihrer Flächenausdehnung (d. h. in einer Normalenrichtung zu der Oberfläche) die Grauwerte der Voxel einer vergleichsweise starken räumlichen Änderung unterliegen.

Dies gilt ebenso für Volumendaten, die mittels anderer tomographischer Verfahren erzeugt werden, auch wenn die räumliche Grauwertfluktuation der Voxel solcher Volumendatensätze teilweise nicht unmittelbar auf materialbedingt variierender Energieabsorption beruht. So beruht beispielsweise der Grauwertkontrast von magnetresonanztomographisch erzeugten Volumendaten typischerweise auf lokal variierenden Relaxationszeiten von zuvor angeregten Kernspinzuständen. Auch hier äußern sich Oberflächen des aufgenommenen Objekts aber in flächig ausgedehnten Grauwert-Kontrasten der Volumendaten.

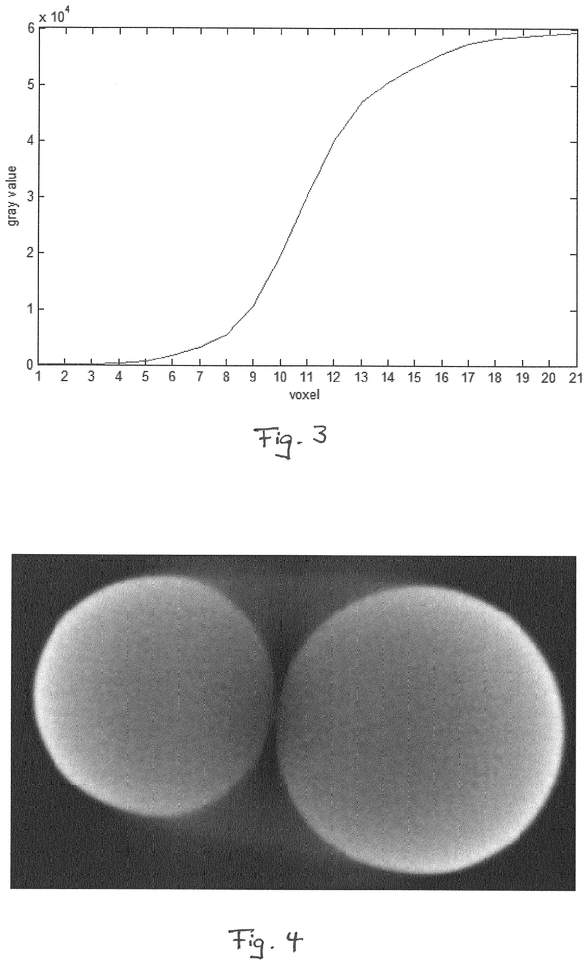

Aufgrund der begrenzten räumlichen Auflösung industrieller tomographischer Methoden, insbesondere der industriellen Computertomographie, äußert sich die Oberfläche des vermessenen Objekts dabei regelmäßig in einem weichen oder verschwommenen (also einem räumlich kontinuierlichen, sich in Normalenrichtung über mehrere aneinander angrenzende Voxel erstreckenden) Übergang von kleinen Grauwerten (entsprechend dem niederabsorbierenden Bereich) zu großen Grauwerten (entsprechend dem hochabsorbierenden Bereich) oder umgekehrt. In Fig. 3 ist beispielhaft ein Grauwertverlauf (auch als Grauwertprofil bezeichnet) eines computertomographisch erzeugten Volumendatensatzes dargestellt, wie er sich typischerweise senkrecht zu einer Oberfläche ergibt, an der bei dem aufgenommenen Objekt Material wie z. B. Kunststoff einerseits und Luft andererseits aneinandergrenzen.

Obwohl der durch die Oberfläche des aufgenommen Objekts verursachte Grauwertübergang in den Volumendaten also nicht scharf ist (auch wenn die Oberfläche des realen vermessenen Objekts tatsächlich scharf begrenzt ist), würden es herkömmliche Methoden zur Oberflächenbestimmung oft grundsätzlich ermöglichen, die räumliche Lage der Oberfläche mit einer Genauigkeit zu bestimmen, die kleiner als die Kantenlänge eines Voxels ist.

Allerdings treten in der industriellen Computertomographie ebenso wie in anderen tomographischen Methoden regelmäßig verschiedene Artefakte auf, die zu einer Verschlechterung der Volumendaten führen (z. B. Strahlaufhärtungsartefakte, Streifenartefakte, Streustrahlungsartefakte, Ringartefakte), und die daher die Präzision der Oberflächenbestimmung einschränken. Im Ergebnis werden die Grauwerte in den Volumendaten, abweichend von der tatsächlichen Geometrie des Objektes, verfälscht. Beispielhaft ist in Fig. 4 ein Schnittbild eines artefaktbehafteten, computertomographisch erzeugten Volumendatensatzes eines Objekts dargestellt, das durch zwei aneinander anliegende Stahlkugeln gebildet ist. Voxel mit kleinen Grauwerten (und kleinen Röntgenabsorptionskoeffizienten) sind hier beispielhaft als schwarze oder dunkle Farbpunkte dargestellt, wohingegen Voxel mit großen Grauwerten (und hohen Röntgenabsorptionskoeffizienten) als helle bis weiße Farbpunkte dargestellt sind. Die in der Darstellung erkennbaren, helleren Bereiche zwischen den Abbildern der beiden Kugeln beruhen hierbei auf Artefakten der Bildrekonstruktionen. Diese helleren Bereiche sind somit nicht durch das aufgenommene Objekt, sondern ausschließlich durch die Bildrekonstruktionen verursacht. Des Weiteren werden die Grauwerte aufgrund des Cupping-Effektes (ausgelöst durch Strahlaufhärtung) zwischen den Kugeln systematisch unterschätzt. Aus diesem Grund erscheint es so, als gäbe es einen kleinen Abstand zwischen den Kugeloberflächen, obwohl sie sich tatsächlich in einem Punkt berühren.

Durch Artefakte in den Volumendaten wird die Oberflächenfindung erschwert. So werden die Oberflächen aus artefaktbehafteten Volumendaten regelmäßig - teils erheblich - verfälscht berechnet. Insbesondere werden aufgrund von Artefakten in den Volumendaten mitunter Oberflächenbereiche des realen Objekts nicht erkannt. Ebenso kann es vorkommen, dass aufgrund von Artefakten in den Volumendaten Oberflächenbereiche detektiert werden, die das reale Objekt tatsächlich gar nicht aufweist, so z. B. die vorstehend genannten helleren Flächen zwischen den Kugelflächen.

Aus "An artifact-robust, shape library-based algorithm for automatic segmentation of inner ear anatomy in post-cochlear-implantation CT" von Fitsum A. Reda et al., Proc SPIE Int Soc Opt Eng. 2014 March 21, ist ein Verfahren bekannt, mit dem die Anatomie innerhalb einer Innenohrschnecke bei einem eingesetzten Cochlea-Implantat anhand eines CT segmentiert werden kann, welches nach dem Einsetzen des Implantats durchgeführt wurde.

Der Erfindung liegt die Aufgabe zugrunde, ein Verfahren und ein System anzugeben, mit dem sich die lokale Qualität von Oberflächendaten, die mittels einer Oberflächenbestimmungsmethode aus einem Volumendatensatz extrahiert wer- den, effektiv bestimmen lässt.

Bezüglich eines Verfahrens wird diese Aufgabe erfindungsgemäß gelöst durch die Merkmale des Anspruchs 1. Bezüglich eines Systems wird die Aufgabe erfindungsgemäß gelöst durch die Merkmale des Anspruchs 10. Vorteilhafte und teils für sich gesehen erfinderische Ausgestaltungen und Weiterentwicklungen der Erfindung sind in den Unteransprüchen und der nachfolgenden Beschreibung dargelegt.

Das erfindungsgemäße Verfahren dient zur Bestimmung der lokalen Qualität von aus einem Volumendatensatz mittels einer Oberflächenbestimmungsmethode extrahierten Oberflächendaten.

In an sich üblicher Weise umfasst der Volumendatensatz eine dreidimensionale Matrix von Voxeln, denen jeweils ein Grauwert zugeordnet ist. Die Oberflächendaten umfassen eine Anzahl von aus dem Volumendatensatz extrahierten Oberflächenpunkten. Die aus dem Volumendatensatz extrahierten Oberflächendaten sind dabei insbesondere in einem Oberflächendatensatz zusammengefasst, der beispielsweise in dem sogenannten STL-Format vorliegt. In diesem Datenformat sind die einzelnen Oberflächenpunkte als Eckpunkte von Dreiecksfacetten zusammengefasst, aus denen die - im Idealfall vollständig geschlossene - Oberfläche zusammengesetzt ist. Zu jeder Dreiecksfacette sind hierbei die 3D-Koordinaten der Eckpunkte sowie die Richtung des senkrecht auf der jeweiligen Dreiecksfacette stehenden Normalenvektors gespeichert. Die Orientierung des Normalenvektors gibt hierbei an, welche Seite der Dreiecksfacette nach "innen" bzw. "außen" gerichtet ist.

Allgemein wird im Zuge des erfindungsgemäßen Verfahrens für die aus dem Volumendatensatz extrahierten Oberflächenpunkte jeweils mindestens ein Qualitätskennwert bestimmt, der die Qualität des jeweils betrachteten Oberflächenpunktes charakterisiert. Als "Qualität" des jeweiligen Oberflächenpunktes (lokale Qualität) wird allgemein eine Größe bezeichnet, die unmittelbar oder mittelbar eine Information darüber enthält, mit welcher Genauigkeit dieser aus dem Volumendatensatz extrahierte Oberflächenpunkt die tatsächliche Oberfläche des aufgenommen Objekts wiedergibt.

Der nachfolgend beschriebene Verfahrensablauf wird dabei zyklisch für jeden dieser Oberflächenpunkte durchgeführt. Derjenige Oberflächenpunkt, auf den der jeweilige Verfahrenszyklus bezogen ist, zu dem also in dem betreffenden Verfahrenszyklus der mindestens eine Qualitätskennwert ermittelt wird, ist hierbei zur Unterscheidung von den jeweils anderen Oberflächenpunkten als der "betrachtete Oberflächenpunkt" bezeichnet.

Verfahrensgemäß wird in jedem Verfahrenszyklus zu dem jeweils betrachteten Oberflächenpunkt nach vorgegebenen Kriterien eine Umgebung in den Volumendaten bestimmt. Die Umgebung ist hierbei durch eine Gruppe von Voxeln des Volumendatensatzes in der Nähe desjenigen Referenzpunktes des Volumendatensatzes gebildet, der hinsichtlich seiner 3D-Koordinaten dem betrachteten Oberflächenpunkt entspricht. Dieser Referenzpunkt stimmt in der Regel nicht exakt mit den Koordinaten eines Voxels überein, sondern liegt meist zwischen mehreren Voxeln.

Anhand des Verlaufs, insbesondere anhand der räumlichen Variation der Grauwerte von Voxeln aus dieser Umgebung wird verfahrensgemäß der mindestens eine Qualitätskennwert abgeleitet. Als Verfahrensresultat wird der oder jeder solchermaßen ermittelte Qualitätskennwert zusammen mit den Koordinaten des betrachteten Oberflächenpunktes ausgegeben. Insbesondere werden die Oberflächenpunkte zusammen mit dem oder jedem jeweils zugehörigen Qualitätskennwert in einem modifizierten Oberflächendatensatz abgelegt, der nachfolgend auch als "qualifizierter Oberflächendatensatz" bezeichnet ist. Die Qualitätskennwerte haben vorzugsweise einen umso größeren Betrag, je besser die Qualität des zugehörigen Oberflächenpunktes ist. Die Qualitätskennwerte können alternativ aber auch derart definiert sein, dass sie die Qualität des zugehörigen Oberflächenpunktes invers angeben (also einen umso größeren Betrag aufweisen, je schlechter die Qualität des zugehörigen Oberflächenpunktes ist). In letzterem Fall sind die Qualitätskennwerte insbesondere als Einzelpunktunsicherheiten definiert (die den räumlichen Fehler eines Oberflächenpunktes in konkreten Längeneinheiten, z B. in Millimetern, angeben).

Nach der Erfindung werden also in der Umgebung eines - insbesondere mittels einer der vorstehend genannten Methoden zur Oberflächenbestimmung - bereits extrahierten Oberflächenpunktes die Informationen aus den Volumendaten verwendet, um die Qualität des Oberflächenpunktes abzuschätzen. Dies wird für sämtliche extrahierten Oberflächenpunkte durchgeführt. Das Resultat sind Oberflächenpunkte, die nicht nur Informationen über die Koordinaten in x, y und z des jeweiligen Oberflächenpunktes enthalten, sondern zusätzlich einen oder mehrere Qualitätskennwerte, die die Qualität (d. h. Präzision bzw. Verlässlichkeit) des jeweiligen extrahierten Oberflächenpunktes charakterisieren.

Die Qualitätskennwerte werden vorzugsweise unter Berücksichtigung einer oder mehrerer der nachstehend beschriebenen Kriterien berechnet:
- Als Umgebung des betrachteten Oberflächenpunktes wird ein Suchstrahl bestimmt, der die aus den Oberflächenpunkten ermittelte Oberfläche senkrecht (oder bis zu einem gewissen Winkel abweichend dazu) schneidet. Die nachfolgend beschriebenen Kriterien werden durch Auswertung des aus Voxeln entlang dieses Suchstrahls gebildeten Grauwertprofils (ggf. interpoliert aus mehreren Voxeln) bestimmt:
   o Beurteilung der Schärfe der Grauwertprofils
      Die Qualität des Oberflächenpunktes wird hierbei in zweckmäßiger Ausführung um so höher bewertet, je schärfer der Übergang des Grauwertprofils von hohen zu niedrigen Werten ausgeprägt ist, insbesondere je größer die Steigung des Grauwertprofils am Ort des Oberflächenpunktes ist. Hierzu wird vorzugsweise als Kriterium für die Qualität des jeweils betrachteten Oberflächenpunktes entlang des Suchstrahls ein Maß für die Steigung des Grauwertprofils bestimmt. Dieses Maß wird insbesondere durch Anpassung des Grauwertprofils mit einem hinterlegten Referenzprofil bestimmt. Als Referenzprofil (zu erwartendes Profil) sind hierbei beispielsweise eine Fehlerfunktion (Error Funktion) oder, falls die Ableitung der Grauwerte entlang des Suchstrahls betrachtet wird, eine Gauß-Kurve hinterlegt, wobei die jeweilige Funktion durch Einstellung ihrer Parameter bestmöglich an das ermittelte Grauwertprofil angepasst (gefittet) wird. Das Maß für die Steigung wird in diesem Fall aus mindestens einem Parameter des angepassten Referenzprofils (z. B. dem Maximum der gegebenenfalls angepassten Gauß-Funktion) bestimmt. Die Steigung wird optional in Relation zu dem Kontrast des Grauwertprofils betrachtet, also insbesondere durch den Kontrast (d. h. den Grauwertunterschied zwischen dem niederabsorbierenden Bereich und dem hochabsorbierenden Bereich) dividiert. Um zu verhindern, dass die Ermittlung der Qualitätskennzahl durch eine anomal (z. B. durch Rauschen oder Artefakte) beeinflusste Steigung verfälscht wird, wird die ermittelte Steigung bei der Berechnung des Qualitätskennwerts vorzugsweise in Relation zu dem Rauschanteil (Signal-to-Noise-Ratio) und/oder zu der Monotonie des Grauwertprofils gesetzt. Alternativ wird als Maß für die Schärfe des Grauwertprofils die Breite der an die räumliche Ableitung des Grauwertprofils angepassten Gauß-Kurve herangezogen.
   o Beurteilung des Kontrastes des Grauwertprofils
      Hierzu wird als Kriterium für die Qualität des betrachteten Oberflächenpunktes entlang des Suchstrahls ein Maß für den Kontrast des Grauwertprofils bestimmt. Zur Berechnung des Kontrasts werden insbesondere - z. B. durch Vergleich von Mittelwerten oder asymptotischen Grenzwerten - die beiden Seiten des durch den Oberflächenpunkt geteilten Grauwertprofils (entsprechend dem niederabsorbierenden Bereich sowie dem hochabsorbierenden Bereich) miteinander verglichen. Beispielsweise wird also der Mittelwert des rechtsseitig des Oberflächenpunkts gelegenen Teils des Grauwertprofils mit dem Mittelwert des linksseitig des Oberflächenpunkts gelegenen Teils des Grauwertprofils verglichen, wobei z. B. die Differenz dieser - rechtsseitigen bzw. linksseitigen - Mittelwerte als Maß für den Kontrast herangezogen wird. Bei der Mittelwertbildung bleibt optional ein Bereich des Grauwertprofils um den extrahierten Oberflächenpunkt unberücksichtigt. Die Qualität des Oberflächenpunktes wird in zweckmäßiger Ausführung um so höher bewertet, je größer der ermittelte Kontrast ist. In einer verfeinerten Variante des Verfahrens wird die Qualität des Oberflächenpunktes umso höher bewertet, je besser der ermittelte Kontrast mit einem vorgegebenen Sollwert übereinstimmt. Der ermittelte Kontrast wird bei der Berechnung des Qualitätskennwerts optional in Relation zu dem Rauschanteil des Grauwertprofils (wiederum entsprechend einer Signal-to-Noise-Ratio) gesetzt.
   ∘ Beurteilung des Rauschens des Grauwertprofils
      Hierzu wird als Kriterium für die Qualität des betrachteten Oberflächenpunktes entlang des Suchstrahls ein Maß für das Rauschen des Grauwertprofils bestimmt. Das Rauschen wird hierbei in verschiedenen Ausgestaltungsvarianten der Erfindung entweder über das gesamte Grauwertprofil ermittelt oder lediglich auf einer Seite des durch den Oberflächenpunkt geteilten Grauwertprofils (also nur im niederabsorbierenden Bereich oder nur im hochabsorbierenden Bereich des Grauwertprofils). In einer Weiterentwicklung dieser Ausgestaltungsform wird das Rauschen des Grauwertprofils jeweils separat für den niederabsorbierenden Bereich und den hochabsorbierenden Bereich des Grauwertprofils bestimmt, wobei die solchermaßen ermittelten Rauschwerte miteinander und/oder mit jeweils zugeordneten Sollwerten verglichen werden. Dies ist insbesondere aufgrund der Tatsache sinnvoll, dass der Rauschanteil in dem niederabsorbierenden Bereich und dem hochabsorbierenden Bereich der aus den Volumendaten extrahierten Grauwertprofile regelmäßig verschieden stark ausgeprägt ist. So weisen die Grauwertprofile - gemessen an den Absolutbeträgen der Grauwerte - in dem niederabsorbierenden Bereich regelmäßig einen geringeren Rauschanteil auf als in dem hochabsorbierenden Bereich. Relativ gesehen - also unter Betrachtung der jeweiligen Rauschamplitude im Verhältnis zu dem lokal gemittelten Absolutbetrag der Grauwerte - weisen die Grauwertprofile in dem niederabsorbierenden Bereich dagegen meistens einen höheren Rauschanteil auf als in dem hochabsorbierenden Bereich.
   ∘ Beurteilung der Abweichung des Grauwertprofils von einem hinterlegten Referenzprofil
      Als Referenzprofil sind hierbei wiederum beispielsweise eine Fehlerfunktion (Error Funktion) oder, falls die Ableitung der Grauwerte entlang des Suchstrahls betrachtet wird, eine Gauß-Kurve hinterlegt, wobei die jeweilige Funktion optional durch Einstellung ihrer Parameter zunächst bestmöglich an das ermittelte Grauwertprofil angepasst (gefittet) wird. Als Maß für die Abweichung werden beispielsweise die Summe oder der Mittelwert der quadrierten Abweichungen der Einzelwerte des ermittelten Grauwertprofils von entsprechenden Werten des Referenzprofils herangezogen. Die Qualität des Oberflächenpunktes wird hierbei in zweckmäßiger Ausführung umso höher bewertet, je weniger das Grauwertprofil von dem Referenzprofil abweicht.
   ∘ Beurteilung der Symmetrie des Grauwertprofils
      Die Qualität des Oberflächenpunktes wird hierbei in zweckmäßiger Ausführung um so höher bewertet, je symmetrischer das Grauwertprofil bezüglich des Orts des extrahierten Oberflächenpunktes ist. Als Maß für die Symmetrie des Grauwertprofils wird beispielsweise der Mittelwert der quadrierten Abweichungen der Einzelwerte des ermittelten Grauwertprofils von entsprechenden Werten des an dem Referenzvoxel oder dem Profilwendepunkt als Symmetriepunkt gespiegelten Grauwertprofil herangezogen.
   ∘ Beurteilung der Monotonie des Grauwertprofils
      Hierzu wird als Kriterium für die Qualität des betrachteten Oberflächenpunktes entlang des Suchstrahls ein Maß für die Monotonie (d. h. die Uniformität der Steigung) des Grauwertprofils bestimmt. Die Qualität des Oberflächenpunktes wird hierbei in zweckmäßiger Ausführung umso höher bewertet, je weniger das Grauwertprofil von dem monotonen (d. h. ausschließlich fallenden oder steigenden) Verlauf der Grauwerte abweicht. Optional wird die Beurteilung der Monotonie auf einen vorgegebenen Bereich des Grauwertprofils um den extrahierten Oberflächenpunkt beschränkt, so dass hierfür nicht das gesamte Grauwertprofil betrachtet wird.
   o Beurteilung des Abstandes des (mittels einer gegebenen Oberflächenbestimmungsmethode) extrahierten, betrachteten Oberflächenpunktes zu (mindestens) einem alternativen Oberflächenpunkt (Alternativpunkt), der entlang des Suchstrahls mittels einer anderen Oberflächenbestimmungsmethode extrahiert wird
      Die Qualität des betrachteten Oberflächenpunktes wird hierbei in zweckmäßiger Ausführung um so höher bewertet, je geringer die mittels verschiedener Methoden bestimmten Oberflächenpunkte beabstandet sind. Die Bestimmung der (dem gemeinsamen Suchstrahl zugeordneten) Oberflächenpunkte ist hierbei bevorzugt ein Teil des erfindungsgemäßen Verfahrens. Alternativ hierzu werden extern ermittelte Oberflächenpunkte als Eingangsgröße für das erfindungsgemäße Verfahren herangezogen, so dass in diesem Fall die Bestimmung der Oberflächenpunkte mittels der mehreren Methoden selbst kein Bestandteil des erfindungsgemäßen Verfahrens ist. Die zur Bestimmung der Oberflächenpunkte verwendeten Methoden können ggf. lokale und globale Schwellwerte verwenden.

   Anstelle eines einzelnen Suchstrahl werden optional zu jedem betrachteten Oberflächenpunkt mehrere Suchstrahlen bestimmt, die senkrecht (oder bis zu einem gewissen Winkel abweichend dazu) zu der aus den Oberflächenpunkten ermittelten Oberfläche stehen. Die vorstehend beschriebenen Kriterien werden in diesem Fall aus den Grauwertprofilen (ggf. interpoliert aus mehreren Voxeln) entlang dieser mehreren Suchstrahlen ermittelt.
- Als Umgebung des betrachteten Oberflächenpunktes wird eine Schnittebene bestimmt, die entlang der aus den Oberflächenpunkten ermittelten Oberfläche verläuft. Die nachfolgend beschriebenen Kriterien werden durch Auswertung des Grauwertprofils von Voxeln aus dieser Schnittebene (ggf. interpoliert aus mehreren Voxeln) bestimmt:
   o Beurteilung des Rauschens
      Hierzu wird als Kriterium für die Qualität des betrachteten Oberflächenpunktes ein Maß für das Rauschen des Grauwertprofils innerhalb der Schnittebene bestimmt. Die Qualität des Oberflächenpunktes wird hierbei in zweckmäßiger Ausführung umso höher bewertet, je geringer das Rauschen oder je homogener die Grauwerte innerhalb der Schnittebene sind. Vorzugweise wird dabei ausschließlich ein den betrachteten Oberflächenpunkt umgebender Bereich der Schnittebene ausgewertet. Rauschanteile aus außerhalb diesem Bereich liegenden Bereichen der Schnittebene werden somit vorzugsweise nicht berücksichtigt.
   ∘ Beurteilung der Homogenität der Grauwerte
      Hierzu wird als Kriterium für die Qualität des betrachteten Oberflächenpunktes ein Maß für die Homogenität des Grauwertprofils innerhalb der Schnittebene bestimmt. Die Qualität des Oberflächenpunktes wird hierbei in zweckmäßiger Ausführung um so höher bewertet, je homogener die Grauwerte innerhalb der Schnittebene sind, je weniger diese Grauwerte also fluktuieren (d. h. räumlich variieren). Dem liegt die Erkenntnis zugrunde, dass ein ausgeprägter Gradient der Grauwerte innerhalb der Schnittebene auf eine Kante des Objektes hinweisen würde, wo erfahrungsgemäß größere Abweichungen der extrahierten Punkte zu erwarten sind. Auch hier wird vorzugsweise ausschließlich ein den betrachteten Oberflächenpunkt umgebender Bereich der Schnittebene ausgewertet. Grauwerte aus außerhalb dieser Umgebung liegenden Bereichen der Schnittebene werden somit nicht berücksichtigt. Um Rauschanteile bei der Bestimmung der Homogenität möglichst zu unterdrücken, werden die innerhalb der Schnittebene berücksichtigten Grauwerte optional vor der Berechnung der vorstehend genannten Maßes räumlich geglättet.

Bei der vorstehend genannten Schnittebene handelt es sich um eine in dem betrachteten Oberflächenpunkt angelegte Tangentialebene. In einer alternativen Ausführung der Erfindung wird anstelle einer ebenen Tangentialfläche eine gekrümmte (insbesondere kugelschalenförmige, ellipsoidförmige oder - vor allem im Bereich von Kanten - zylindermantelförmige) Tangentialfläche um das Referenzvoxel als Umgebung gewählt. In wiederum anderen Ausführungsvarianten der Erfindung wird als Umgebung ein Kugel- oder Zylindervolumen um das Referenzvoxel gewählt. Auch in diesen Varianten werden als Kriterium für die Berechnung der Qualitätskennwerte vorzugsweise ein Maß für die Homogenität und/oder ein Maß für das Rauschen der Grauwerte in der jeweiligen Umgebung herangezogen.

Jedes der vorstehend beschriebenen Kriterien kann im Rahmen der Erfindung einzeln (isoliert) zur Berechnung der Qualitätskennwerte herangezogen werden. Dabei können im Rahmen der Erfindung jedem extrahierten Oberflächenpunkt mehrere Qualitätskennwerte zugeordnet sein, die jeweils unter Berücksichtigung eines Kriteriums ermittelt wurden. Vorzugsweise wird der oder jeder Qualitätskennwert eines jeden Oberflächenpunktes aber unter Berücksichtigung einer Kombination mehrerer der vorstehend beschriebenen Kriterien ermittelt, beispielsweise als gewichtete Summe von Einzelzahlen, die jeweils unter Heranziehung eines einzelnen Kriteriums ermittelt wurden.

Um Rechenzeit zu sparen, erfolgt in vorteilhafter Ausgestaltung des Verfahrens die Errechnung der Qualitätskennwerte während (parallel zu) der Oberflächenbestimmung. In diesem Fall ist die Bestimmung der Oberflächenpunkte (mittels einer oder mehrerer verschiedener Oberflächenbestimmungsmethoden) ein Bestandteil des erfindungsgemäßen Verfahrens und des zugeordneten Systems. In alternativer Ausführung der Erfindung erfolgt die Errechnung der Qualitätskennwerte zeitlich nach der Oberflächenbestimmung. In diesem Fall kann die Bestimmung der Oberflächenpunkte (mittels einer oder mehrerer verschiedener Methoden) ebenfalls ein Bestandteil des erfindungsgemäßen Verfahrens und des zugeordneten Systems sein. Alternativ können sich in letzterem Fall das erfindungsgemäße Verfahren und das zugehörige System auf die Berechnung der Qualitätskennwerte beschränken. Das Verfahren verwendet in diesem Fall als Eingangsgrößen neben den Volumendaten des Objekts auch Oberflächendaten, die mittels eines oder mehrerer externer Algorithmen aus diesen Volumendaten abgeleitet wurden.

Die mit den Qualitätskennwerten versehenen Oberflächendaten werden in einer Weiterentwicklung der Erfindung in einen modifizierten, für eine Darstellung auf einem Bildschirm oder in einem Ausdruck aufbereiteten Datensatz umgewandelt, indem unter Berücksichtigung der Qualitätskennwerte modifizierte Farbwerte für die Oberflächenpunkte berechnet und den Oberflächenpunkten zugeordnet werden. Bei der Berechnung dieser Farbwerte werden vorzugsweise zusätzlich zu den Qualitätskennwerten auch die Grauwerte der ursprünglichen Volumendaten berücksichtigt. Beispielsweise wird hierbei - gemäß einer vorgegebenen Farbcodierung - der Farbton eines jeden Oberflächenpunktes (z. B. das Verhältnis der Grundfarben Rot, Grün und Gelb) durch den Qualitätskennwert bestimmt, während die Farbhelligkeit durch den ursprünglichen Grauwert bestimmt wird. Mit anderen Worten werden die ursprünglichen Grauwerte, je nach Qualität der Oberflächenbestimmung, unterschiedlich eingefärbt. In alternativer Ausführung der Erfindung wird die Farbhelligkeit in einer 3D-Visualisierung (Szene) des Volumendatensatzes durch Volume Rendering (also durch eine eine Beleuchtungssituation simulierende Licht-Schatten-Darstellung) bestimmt.

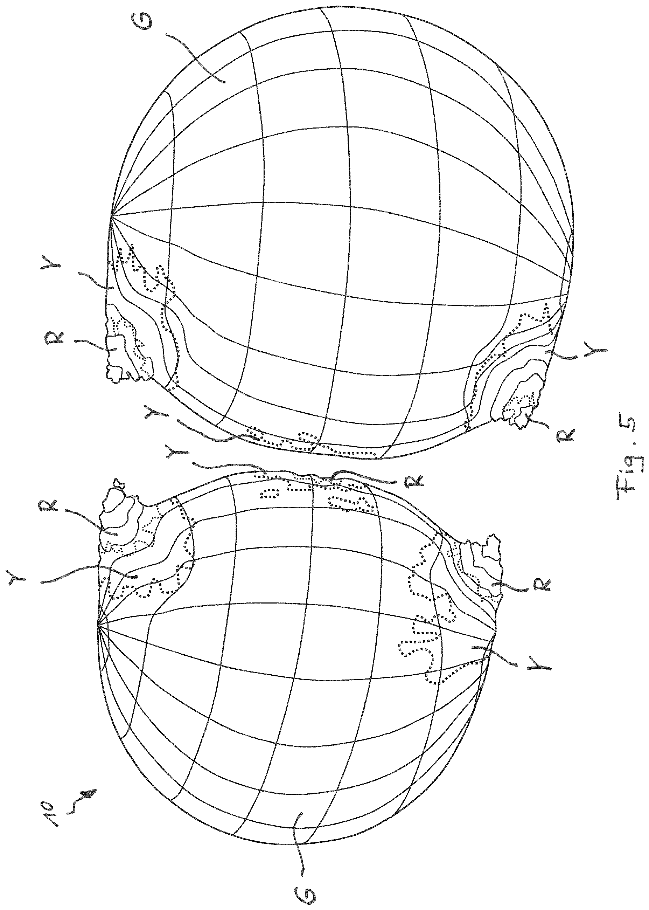

Vorzugsweise wird der Qualitätskennwert in lediglich wenigen Abstufungen auf verschiedene Farbtöne abgebildet. So wird der Qualitätskennwert insbesondere, wie in Fig. 5 angedeutet, gemäß einer dreistufigen Farbcodierung auf die drei Farbtöne G (grün, entsprechend einem guten, d. h. einen oberen Schwellwert überschreitenden Qualitätskennwert), Y (gelb, entsprechend einem mittleren, d. h. zwischen dem oberen Schwellwert und einem unteren Schwellwert liegenden Qualitätskennwert) und R (rot, entsprechend einem schlechten, d. h. einen unteren Schwellwert unterschreitenden Qualitätskennwert) abgebildet.

Anhand der so gewonnen Farbwerte wird die extrahierte Oberfläche in Falschfarben, die die Präzision oder Verlässlichkeit der einzelnen Oberflächenpunkte wiederspiegeln, als Schnittbild oder gerenderte 3D-Visualisierung (Szene) dargestellt. Fig. 4 zeigt diesbezüglich eine Darstellung eines aus dem Volumendatensatz gemäß Fig. 4 abgeleiteten Oberflächendatensatzes, in dem die artefaktbedingten Ausformungen (nachfolgend als "Hörner" bezeichnet) der Kugeloberflächen durch gelbe bzw. rote Farbgebung als Regionen geringerer Qualität hervorgehoben sind.

Dies ermöglicht es, übersichtlich darzustellen, in welchen Regionen der Oberflächenextraktion vertraut werden kann und in welchen Regionen größere Abweichungen zu erwarten sind. Die von Artefakten beeinflussten Oberflächenpunkte wurden in diesem Beispiel zuverlässig erkannt. Dies ist für die industrielle Anwendung der CT von größter Relevanz, da die Aussagekraft der von durch CT gewonnen Daten noch oft in Frage gestellt wird.

Zusätzlich kann der Schritt zurück auf die Volumendaten vorgenommen werden, um die Voxel in der Umgebung der als schlecht markierten Oberflächenpunkte als artefaktbehaftet zu beurteilen.

In einer weiteren Weiterentwicklung der Erfindung werden an die mit den Qualitätskennwerten versehenen Oberflächendaten (oder an einen ausgewählten Teil dieser Oberflächendaten) in einem nachgelagerten Verfahrensschritt mittels eines Optimierungsverfahrens (z. B. mittels des Levenberg-Marquardt-Algorithmus) eines oder mehrere Geometrielemente angepasst (gefittet). Als Geometrieelemente werden hierbei hinsichtlich Position, Orientierung, Größe etc. parametrierbare mathematische Funktionen bezeichnet, die jeweils eine vorgegebene Geometrie, z. B. einen Punkt, eine Linie, einen Kreis, eine Ebene, eine Kugel, einen Zylinder, einen Kreiskegel oder einen Torus beschreiben. Die Geometrieelemente sind dabei derart gewählt, dass sie der Geometrie des realen Objekts (oder einer Zeichnung, einem CAD-Modell oder einer Spezifikation des Objekts) in seiner Gesamtheit oder in einem Volumenabschnitt entsprechen oder nahekommen. So werden beispielsweise an den Oberflächendatensatz gemäß Fig. 4, der das aus zwei Metallkugeln bestehende Objekt des Volumendatensatzes gemäß Fig. 4 darstellt, zweckmäßigerweise zwei kugelförmige Geometrieelemente angepasst.

Um Störeinflüsse von artefaktbedingten Fehlern des Oberflächendatensatzes (im Falle des Oberflächendatensatzes gemäß Fig. 4 der artefaktbedingten "Hörner") auf die Anpassung zu vermeiden oder zumindest möglichst gering zu halten, werden die den Oberflächendaten zugeordneten Qualitätskennwerte bei der Anpassung zusätzlich berücksichtigt, indem Oberflächenpunkte, die als ungenau bewertet sind, entweder komplett vernachlässigt oder geringer gewichtet werden. Dies ermöglicht eine besonders exakte Anpassung der Geometrieelemente, was in der dimensionellen Messtechnik von höchster Bedeutung ist.

Alternativ hierzu werden die Oberflächendaten durch eine affine Koordinatentransformation (insbesondere eine Drehung, Verschiebung und/oder Skalierung) an mindestens ein geometrisches Element angepasst wird. Auf diese Weise werden die Oberflächendaten sowie optional auch der zugrundeliegende Volumendatensatz beispielsweise an ein CAD-Modell der in dem Volumendatensatz abgebildeten Objekts angepasst. Auch können die Messdaten auf diese Weise bezüglich eines gewünschten Koordinatensystems ausgerichtet werden, um später an klar definierten Positionen die Messungen durchführen zu können. Bei der Koordinatentransformation der Oberflächendaten werden vorteilhafterweise die zuvor ermittelten Qualitätskennwerte in der vorstehend beschriebenen Weise (nämlich insbesondere durch komplette Vernachlässigung oder geringere Gewichtung von ungenauen Oberflächenpunkten) berücksichtigt.

Es ist zu erwarten, dass in der unmittelbaren Umgebung eines Oberflächenpunktes mit geringem Qualitätskennwert auch andere Messpunkte eine größere Unsicherheit besitzen, auch wenn diese selbst gute Qualitätskennwerte besitzen. Aus diesem Grund wird in vorteilhafter Ausführung der Erfindung ein glättender Filter auf die Qualitätskennwerte angewendet, so dass die ursprünglich berechneten Qualitätskennwerte der benachbarten Messpunkte mit einbezogen werden.

Zusätzlich oder alternativ wird in einer zweckmäßigen Ausgestaltung der Erfindung um einen Oberflächenpunkt mit geringem Qualitätskennwert ein Sicherheitsabstand eingerichtet, in dem keine weiteren Messpunkte berücksichtigt werden.

Andererseits kann die Anpassung von Geometrieelementen an die Messdaten zu instabilen Ergebnissen führen, wenn zu viele Oberflächenpunkte aus einem bestimmten Bereich wegen zu schlechter Qualitätskennwerte verworfen werden. Werden beispielsweise beim Anpassen eines Kreises an die Messpunkte nur Punkte aus dem Bereich eines kleinen Kreissegmentes berücksichtigt (weil im restlichen Bereich starke Artefakte auftreten), ist erfahrungsgemäß die Anpassung der Kreisparameter (nämlich der Koordinaten des Mittelpunktes und des Radius des Kreises) mit vergleichsweise großen Unsicherheiten behaftet. Aus diesem Grund werden in bevorzugter Ausgestaltung der Erfindung bei der Berechnung des Gewichtungsfaktors eines einzelnen Oberflächenpunktes auch die Gewichtungen der benachbarten Oberflächenpunkte berücksichtigt. Auf diese Weise können Messpunkte trotz schlechter Qualitätskennwerte bevorzugt behandelt werden, falls in der näheren Umgebung sehr wenige Messpunkte guter Qualitätskennwerte vorhanden sind.

Wiederum alternativ zu der Anpassung mindestens eines geometrischen Elements an die Oberflächendaten oder der Anpassung der Oberflächendaten an mindestens ein geometrisches Objekt ist schließlich vorgesehen, einen Oberflächendatensätze unter Berücksichtigung der zugeordneten Qualitätskennwerte an einen anderen Oberflächendatensatz anzupassen (Datenfusion). So können beispielsweise mehrere Messungen eines Objektes mit unterschiedlichen Aufnahmeparametern durchgeführt werden, wobei jeweils eine Messung genauere Messergebnisse für einen bestimmten Bereich des Objektes aufweist. Durch die Fusion der Datensätze werden die Vorteile der einzelnen Messungen kombiniert (oder anders ausgedrückt, die Nachteile einer Messung ausgeglichen).

Hierbei können die Qualitätskennwerte auf zwei verschiedene Weisen eingesetzt werden:
- Bei der Berechnung der Ausrichtung der Datensätze aneinander (Translation und Rotation des Koordinatensystems) werden vorwiegend diejenigen Punkte berücksichtigt, die in möglichst in allen Messungen eine hohe Qualität aufweisen. Auf diese Weise wird eine genauere Ausrichtung erreicht.
- Nachdem die Datensätze aneinander ausgerichtet wurden, muss entschieden werden, an welchen Stellen die Messpunkte der einzelnen Messungen in das Endergebnis übernommen werden. Für Bereiche, in denen lediglich eine Messung eine hohe lokale Qualität aufweist, werden sinnvollerweise die Oberflächeninformationen dieser Messung übernommen. Haben mehrere Messungen eine vergleichbare lokale Qualität in diesem Bereich, so wird sinnvollerweise ein gemittelter Wert (oder ein gewichtet gemittelter Wert) aus den Oberflächeninformationen der einzelnen Messungen bestimmt und verwendet.

In einer weiteren Weiterentwicklung der Erfindung werden aus den Qualitätskennwerten eine Unsicherheit bzw. einen Unsicherheitsbeitrag für jeden einzelnen Oberflächenpunkt abgeschätzt, woraus in der Folge die aufgabenspezifische Messunsicherheit abgeschätzt werden kann.

In einer weiteren Weiterentwicklung der Erfindung werden die Qualitätskennwerte dazu verwendet, um die optimalen Aufnahmeparameter für eine Messung beziehungsweise Messreihe zu bestimmen. Die Computertomographie ist aufgrund ihrer Komplexität ein Messverfahren, bei dem die Messergebnisse sehr stark von der Erfahrung des Bedieners abhängig sind. Unter anderem sind die Orientierung des Messobjekts im CT sowie die gewählten Aufnahmeparameter (insbesondere Röntgenspannung, Vorfilterung der Röntgenstrahlung und die Winkelschritte bei der Aufnahme der Projektionsbilder) wichtige Einflussfaktoren, die derzeit größtenteils durch das Erfahrungswissen des Bedieners festgelegt werden. Um eine Optimierung eines oder mehrere dieser Einflussfaktoren weitestgehend ohne Bedienerunterstützung durchführen zu können, ist es nötig, möglichst objektiv und automatisiert die Qualität der einzelnen Projektionsdatensätze zu beurteilen, wozu das erfindungsgemäße Verfahren die erforderliche Information liefert. Die Bestimmung einer optimierten Orientierung des Messobjekts bzw. die Bestimmung optimierter Aufnahmeparameter wird im Rahmen der Erfindung insbesondere dadurch durchgeführt, dass Testmessungen des zu messenden Bauteils mit verschiedender Orientierung bzw. variierenden Aufnahmeparametern real durchgeführt oder simuliert werden. Um die optimierte Orientierung bzw. die optimierten Aufnahmeparameter bestimmen zu können, wird dann entschieden, welche Variation der Orientierung bzw. Aufnahmeparameter das vielversprechendste Ergebnis liefert. Hierfür wird die Information über die Qualität der einzelnen Oberflächenpunkte verwendet. Für den Optimierungsvorgang wird dabei definiert, für welche Regionen bzw. zu messenden Merkmale des Objektes die Orientierung bzw. Aufnahmeparameter optimiert werden sollen. Nachfolgend werden alle Parameter mit dem Ziel optimiert, dass das Volumen bzw. die Oberfläche besonders in diesen Bereichen eine gute Qualität bezüglich der messtechnischen Auswertung der Daten hat. Artefakte, die in uninteressanten Regionen auftreten, können somit in Kauf genommen werden, falls sie die eigentlichen dimensionellen Messungen nicht negativ beeinflussen.

Zu optimierende Aufnahmeparameter sind insbesondere die Beschleunigungsspannung der Röntgenröhre, die Vorfilterung der Röntgenstrahlung, die Orientierung des Bauteils auf dem Drehtisch, die Anzahl und Verteilung der Winkelschritte und die Größe des Röntgenspots.

In einer weiteren Weiterentwicklung der Erfindung werden die Qualitätskennwerte bei iterativ arbeitenden Oberflächenextraktionsalgorithmen als Input verwendet. So wird beispielsweise die Länge des Suchstrahls bei als schlecht bewerteten Oberflächenpunkten verlängert, um die korrekte Position möglichst exakt zu finden. Bei als gut bewerteten Oberflächenpunkten wird der Suchstrahl hingegen verkürzt, um Rechenzeit zu sparen. Alternativ oder zusätzlich wird der Qualitätskennwert vorzugsweise für die einzelnen Oberflächenpunkte als Abbruchkriterium bei der iterativen Oberflächenfindung genutzt. Dies ermöglicht eine größere Anzahl von Iterationen in artefaktbehafteten Regionen, ohne die Rechenzeit zu stark zu vergrößern.

Die ermittelten Qualitätskennwerte der Oberflächenpunkte können ebenfalls verwendet werden, um die Qualität bzw. Unsicherheit verschiedener Messungen miteinander zu vergleichen. Die ermittelten Qualitätskennwerte der Oberflächenpunkte können ebenfalls verwendet werden, um die Leistungsfähigkeit verschiedener Extraktionsalgorithmen miteinander zu vergleichen oder die Parameter eines Algorithmus zu optimieren.

Sämtliche erwähnte Anwendungen benötigen keine Referenzmessung und kein Vorwissen, beispielsweise aus CAD-Daten, und sind auch für verborgene Geometrien durchführbar, für die Referenzmessungen nicht möglich oder nur mit hohem Aufwand durchführbar sind.

Die Erfindung ist prinzipiell auf alle Volumendaten bzw. tomographischen Daten anwendbar und somit nicht nur auf Röntgen-Computertomographie beschränkt. Weitere denkbare Anwendungsfelder sind beispielsweise Magnetresonanztomographie und Ultraschalltomographie.

Das erfindungsgemäße System ist in einer zweckmäßigen Ausführung durch ein Computerprogramm (Software) gebildet, das zur Durchführung des erfindungsgemäßen Verfahrens eingerichtet ist, so dass dieses Verfahren bei Ablauf des Computerprogramms auf einem Computer automatisch ausgeführt wird. Verkörperungen des erfindungsgemäßen Systems sind dabei weiterhin ein maschinenlesbarer Datenträger (z. B. eine CD-ROM oder Festplatte), auf dem das genannte Computerprogramm gespeichert ist, sowie ein Computer, auf dem das Computerprogramm lauffähig installiert ist.

Bei dem das erfindungsgemäße Verfahren implementierenden Computerprogramm kann es sich im Rahmen der Erfindung um eine eigenständige Softwareapplikation handeln, die isoliert, z. B. auf einem Personal Computer, lauffähig ist. Alternativ kann das das erfindungsgemäße Verfahren implementierende Computerprogramm aber auch als Bestandteil, insbesondere als nachrüstbares Softwaremodul der Steuer- und Auswertesoftware eines Tomographen, insbesondere eines industriellen Computertomographen, ausgebildet sein.

Eine spezielle Verkörperung des erfindungsgemäßen Systems ist somit ein Tomograph, insbesondere ein industrieller Computertomograph mit einer Steuer- und Auswertesoftware, die das erfindungsgemäße Verfahren implementiert.

Nachfolgend werden Ausführungsbeispiele der Erfindung anhand einer Zeichnung erläutert. Hierin zeigen:
- Fig. 1: in schematischer Darstellung ein System zur Bestimmung der lokalen Qualität von aus Volumendaten extrahierten Oberflächendaten,
- Fig. 2: in einem schematischen Flussdiagramm ein mittels des Systems gemäß Fig. 1 durchgeführtes Verfahren,
- Fig. 3: in einem schematischen Diagramm ein Grauwertprofil entlang eines Suchstrahls innerhalb eines computertomographisch erzeugten Volumendatensatzes,
- Fig. 4: in einem Schnittbild einen computertomographisch erzeugten Volumendatensatz eines Objekts, das aus zwei aneinander anliegenden Stahlkugeln gebildet ist,
- Fig. 5: in einer dreidimensionalen Visualisierung einen aus dem Volumendatensatz gemäß Fig. 4 abgeleiteten Oberflächendatensatz, dessen Oberflächenpunkte nach Maßgabe ihrer jeweiligen Qualität unterschiedlich eingefärbt sind, und
- Fig. 6: in drei übereinander abgebildeten Diagrammen drei Grauwertprofile entlang verschiedener Suchstrahlen durch den Volumendatensatz gemäß Fig. 4, wobei das obere Diagramm den Grauwertverlauf in der Umgebung eines Oberflächenpunktes mit hoher Qualität, das mittlere Diagramm den Grauwertverlauf in der Umgebung eines Oberflächenpunktes mit mittlerer Qualität, und das untere Diagramm den Grauwertverlauf in der Umgebung eines Oberflächenpunktes mit geringer Qualität zeigen.

Einander entsprechende Teile, Größen und Strukturen sind in allen Figuren stets mit gleichen Bezugszeichen versehen.

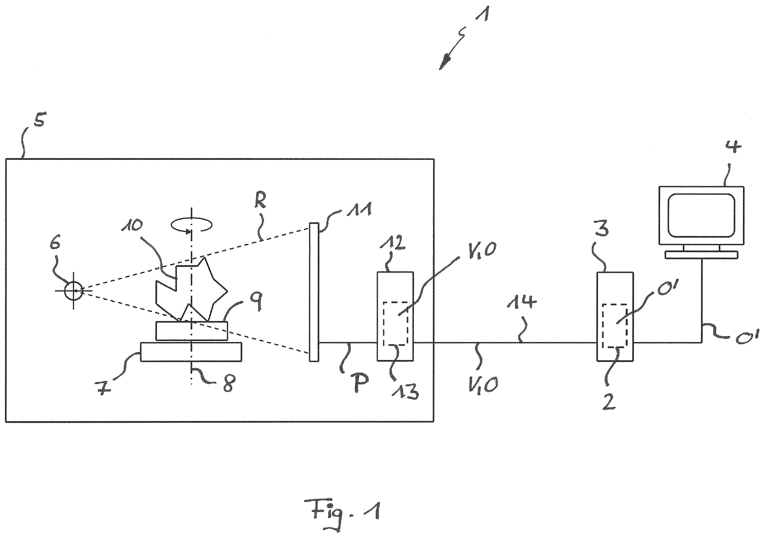

Fig. 1 zeigt in grober schematischer Vereinfachung ein System 1 zur Bestimmung der Qualität von aus Volumendaten extrahierten Oberflächendaten.

Kernbestandteil des Systems 1 ist ein Computerprogramm 2. In der Darstellung gemäß Fig. 1 ist das Computerprogramm 2 in einem Arbeitsrechner 3 lauffähig installiert. Bei dem Arbeitsrechner 3 handelt es sich beispielsweise um einen gewöhnlichen Personalcomputer (PC), der in üblicher Weise mit Ein- und Ausgabemitteln, insbesondere einem Bildschirm 4 ausgestattet ist. Der Arbeitsrechner 3 und der Bildschirm 4 stellen hierbei in einem weiteren Sinne ebenfalls Bestandteile des Systems 1 dar.

Ein optionaler Bestandteil des Systems 1 ist ferner ein industrieller Computertomograph 5. Der Computertomograph 5 umfasst in üblicher Weise eine Röntgenquelle 6, einen Drehtisch 7 mit einem um eine Achse 8 drehbaren Drehteller 9 zur rotierbaren Lagerung eines - eines in Fig. 1 beispielhaft angedeuteten - Objekts 10, einen flächigen Röntgendetektor 11 sowie einen Auswerterechner 12, in dem eine Steuersoftware 13 lauffähig installiert ist.

Der Arbeitsrechner 3 und der Computertomograph 5 sind über eine Datenübertragungsstrecke 14 unmittelbar oder mittelbar zur Datenübertragung verbunden. Bei der Datenübertragungsstrecke 14 handelt es sich insbesondere um ein - drahtgebundenes oder drahtloses - Datenübertragungsnetz, beispielsweise ein LAN (Local Area Network). Die Datenübertragungsstrecke 14 enthält optional (nicht explizit dargestellte) Datenspeicher zur temporären oder permanenten Speicherung der zwischen dem Computertomograph 5 und dem Arbeitsrechner 3 übertragenen Daten.

In einem dem Kern des erfindungsgemäßen Verfahrens vorausgehenden Prozess wird mittels des Computertomographen 5 ein Volumendatensatz V aufgenommen. Hierzu wird das auf dem Drehteller 9 gelagerte Objekt 10 um die Achse 8 rotiert und hierbei mittels der Röntgenquelle 6 mit Röntgenstrahlung R (genauer: einem Röntgenkegelstrahl) bestrahlt. Unter fortgesetzter Rotation des Objekts 10 werden hierbei mittels des in Gegenüberstellung zu der Röntgenquelle 6 angeordneten Röntgendetektors 11 eine Vielzahl von Projektionsbildern P aufgenommen, die das Objekt 10 in unterschiedlichen Projektionen quer zu der Achse 8 zeigen.

Die Projektionsbilder P werden dem Steuerrechner 12 zugeführt. Die dortige Steuersoftware 13 berechnet aus diesen Projektionsbildern P unter Anwendung von numerischer Rückprojektion oder eines anderen Rekonstruktionsalgorithmus den Volumendatensatz V.

In der bevorzugten Ausführungsform der Erfindung berechnet die Steuersoftware 13 zudem aus dem Volumendatensatz V unter Anwendung eines der eingangs genannten Oberflächenbestimmungsmethoden einen Oberflächendatensatz O, dessen Oberflächenpunkte die aus dem Volumendatensatz V ermittelte Oberfläche des Objekts 10 wiedergeben. Der Volumendatensatz V und der zugehörige Oberflächendatensatz O werden dem Arbeitsrechner 3 durch den Computertomographen 5 über die Datenübertragungsstrecke 14 zugeführt.

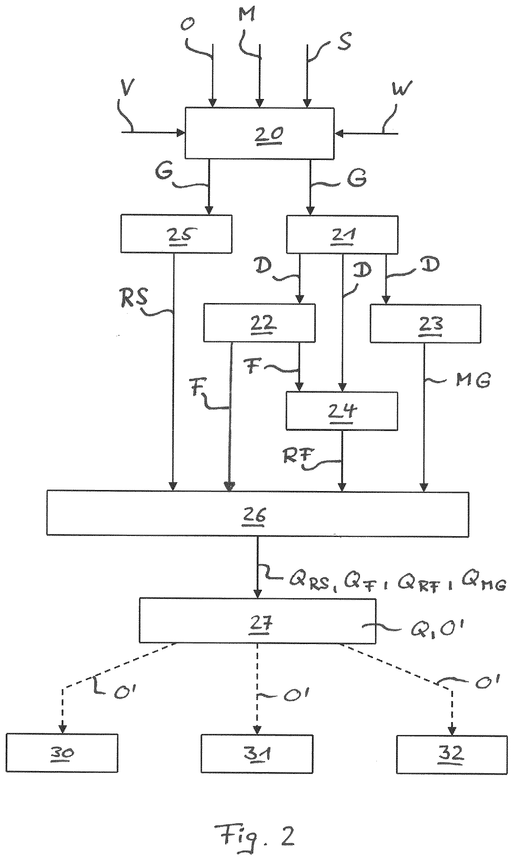

In dem Arbeitsrechner 3 wird unter Ablauf des darin implementierten Computerprogramms 2 ein nachfolgend anhand von Fig. 2 näher beschriebenes Verfahren zur Bestimmung der Qualität der einzelnen Oberflächenpunkte des Oberflächendatensatzes O durchgeführt. Als Eingangsgrößen für das Verfahren werden dem Computerprogramm 2 hierbei der Volumendatensatz V und der zugehörige Oberflächendatensatz O zugeführt. Des Weiteren greift das Computerprogramm 2 als Parameter für die Durchführung des Verfahrens auf Maßangaben M zurück, die die dreidimensionalen Koordinaten des Oberflächendatensatzes O in räumliche Relation zu den Voxeln des Volumendatensatzes V setzen. Anhand der Maßangaben M wird das Computerprogramm 2 somit in die Lage versetzt, einen jeden Oberflächenpunkt des Oberflächendatensatzes O mit einem zugehörigen Voxel des Volumendatensatzes V zu korrelieren, das denselben Ort (Raumpunkt) innerhalb des aufgenommenen Objekts 10 wiedergibt. Weiterhin greift das Computerprogramm 2 als Parameter für die Verfahrensdurchführung auf Angaben zu einer Abtastschrittweite S sowie Angaben zu einem Abtastweg W zurück.

Die Maßangaben M, die Abtastschrittweite S und der Abtastweg W können im Rahmen der Erfindung unveränderlich in dem Computerprogramm 2 implementieren, oder im Rahmen von Konfigurationsdaten in dem Arbeitsrechner 3 hinterlegt sein. Alternativ hierzu kann auch vorgesehen sein, dass diese Parameter durch Nutzerinteraktion variabel vorgebbar sind. Wiederum alternativ hierzu kann vorgesehen sein, dass die Maßangaben M dem Arbeitsrechner 3 als Meta-Daten, z. B. in einem Header des Oberflächendatensatzes O oder des Volumendatensatzes V zugeführt werden.

Anhand der vorstehend beschriebenen Eingangsdaten ermittelt das Computerprogramm 2 in einem ersten Schritt 20 für einen bestimmten, aus dem Oberflächendatensatz O ausgewählten Oberflächenpunkt einen Suchstrahl, also eine mathematische Geradenbezeichnung derart, dass dieser Suchstrahl den betrachteten Oberflächenpunkt durchläuft und hierbei senkrecht auf die durch die Oberflächenpunkte des Oberflächendatensatzes O definierte Oberfläche steht.

Anschließend ermittelt das Computerprogramm 2 anhand der Abtastschrittweite S und des Abtastweges W eine Anzahl von Raumpunkten, die in der durch den Suchstrahl definierten Umgebung des betrachteten Oberflächenpunktes innerhalb des von dem Volumendatensatz V und dem Oberflächendatensatz O abgedeckten Raumvolumens liegen. Jedem Raumpunkt wird hierbei ein Grauwert zugeordnet, der (beispielsweise durch trilineare Interpolation) aus den Grauwerten der den Raumpunkt umgebenden Voxel des Volumendatensatzes V berechnet wird.

Die Grauwerte dieser Voxel fasst das Computerprogramm 2 zu einem Grauwertprofil G zusammen, wie es beispielhaft in Fig. 3 dargestellt ist. Konkret ist das Grauwertprofil G somit eine Grauwertliste (im softwaretechnischen Sinne insbesondere ein Array), das die Abfolge der Grauwerte der entlang des Suchstrahls ausgewählten Voxel des Volumendatensatzes V wiedergibt.

Zu dem solchermaßen ermittelten Grauwertprofil G berechnet das Computerprogramm in einem folgenden Schritt 21 ein zugehöriges Steigungsprofil D, das die mathematisch-numerische Ableitung des Grauwertprofils G entlang des Suchstrahls darstellt. An dieses Steigungsprofil D passt das Computerprogramm 2 in einem anschließenden Schritt 22 unter Anwendung eines nicht-linearen Optimierungsalgorithmus, insbesondere des Levenberg-Marquardt-Algorithmus, eine als Referenzprofil hinterlegte Gauß-Funktion an. Des Weiteren bestimmt das Computerprogramm 2 in einem Schritt 23 aus dem Steigungsprofil D den maximalen Gradienten MG des Grauwertprofils G (entsprechend dem Maximum des Steigungsprofils D).

In einem Schritt 24 bestimmt das Computerprogramm 2 anhand des Steigungsprofils D sowie anhand der in Schritt 22 bestimmten Parameter F der angepassten Gauß-Funktion die gemittelte Abweichung (Residuen) dieser angepassten Gauß-Funktion von dem Steigungsprofil D.

Parallel zu den Schritten 21 bis 24 bestimmt das Computerprogramm 2 in einem Schritt 25 aus dem Grauwertprofil G die Abweichungen (Residuen) des Grauwertprofils G von einem aus dem Grauwertprofil G durch Punktspiegelung abgeleiteten Spiegelprofil.

Aus dem aus Schritt 25 resultierenden quadratischen Abweichungsmittelwert (Root-Mean-Square) RS, aus den Parametern F dem Schritt 22 angepassten Gauß-Funktion (insbesondere aus der Breite der Gauß-Funktion), aus dem in Schritt 24 ermittelten Abweichungsmittelwert RF (Root-Mean-Square) der angepassten Gauß-Funktion von dem Steigungsprofil D sowie aus dem in Schritt 23 bestimmten maximalen Gradient MG bestimmt das Computerprogramm 2 in einem Schritt 26 jeweils einen Qualitätskennwert Q_{RS}, Q_{F}, Q_{RF} bzw. Q_{MG}, wobei diese Qualitätskennwerte Q_{RS}, Q_{F}, Q_{RF} bzw. Q_{MG} jeweils eine Aussage über die Qualität des betrachteten Oberflächenpunktes enthalten. Um die Vergleichbarkeit der einzelnen Qualitätskennwerte Q_{RS}, Q_{F}, Q_{RF} bzw. Q_{MG} sicherzustellen, sind diese Größen stets auf einen Wertebereich zwischen null und eins normiert. Abweichend von der vereinfachten Darstellung gemäß Fig. 2, wo zu den Parametern F der angepassten Gauß-Funktion ein einzelner Qualitätskennwert Q_{F} berechnet wird, können diese Parameter F auch auf mehrere einzelne Qualitätskennwerte abgebildet werden.

Aus den einzelnen Qualitätskennwerten Q_{RS}, Q_{F}, Q_{RF} bzw. Q_{MG} berechnet das Computerprogramm 2 in einem folgenden Schritt 27 durch gewichtete Mittelwertbildung einen Gesamt-Qualitätskennwert Q.

Der vorstehend anhand der Schritte 20 bis 27 beschriebene Verfahrenszyklus wird von dem Computerprogramm 2 für jeden Oberflächenpunkt des Oberflächendatensatzes O wiederholt. Die jeweils resultierenden Werte des Gesamt-Qualitätskennwerts Q werden hierbei in einem qualifizierten Oberflächendatensatz O' abgespeichert, der zu jedem Oberflächenpunkt des Oberflächendatensatzes die dreidimensionalen Koordinaten (x, y, z) des jeweiligen Oberflächenpunktes sowie den zugeordneten Gesamt-Qualitätskennwert Q enthält.

Jeweils optional enthält das Computerprogramm 2 eines oder mehrere der nachstehend beschriebenen Funktionsmodule 30, 31 und 32, mittels derer der qualifizierte Oberflächendatensatz O' automatisch oder auf entsprechende Anforderung durch einen Nutzer des Arbeitsrechners 3 angezeigt oder in sonstiger Weise weiter verarbeitet wird.

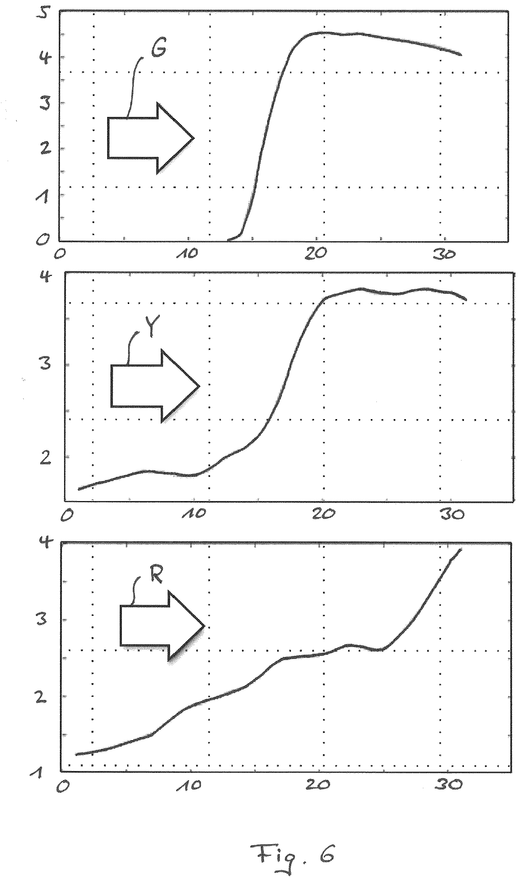

Das Funktionsmodul 30 dient hierbei einer intuitiv verständlichen Anzeige des qualifizierten Oberflächendatensatzes O' inkl. der darin enthaltenen Gesamt-Qualitätskennwerte Q. Im Rahmen des Funktionsmoduls 30 werden die in dem Oberflächendatensatz O' enthaltenen Gesamt-Qualitätskennwerte Q zunächst anhand eines hinterlegten oder interaktiv durch einen Nutzer vorgebbaren Farbschemas auf zugeordnete Farbwerte für eine Falschfarben-Darstellung des Oberflächendatensatzes O' auf dem Bildschirm 4 abgebildet. Wie vorstehend beschrieben und in Fig. 6 anschaulich verdeutlicht, werden die Gesamt-Qualitätskennwerte Q des Oberflächendatensatzes O' hierbei auf eine der drei Farben
- Grün für Oberflächenpunkte mit einem hohen Gesamt-Qualitätskennwert Q,
- Gelb für Oberflächenpunkte mit einem mittleren Gesamt-Qualitätskennwert Q, und
- Rot für Oberflächenpunkte mit einem schlechten Gesamt-Qualitätskennwert Q
abgebildet. Eine entsprechende Fehlfarbendarstellung des beispielhaft durch die zwei Metallkugeln gebildeten Objekts 10 ist schematisch in Fig. 5 dargestellt.

Das Funktionsmodul 31 ist dazu eingerichtet, vorgegebene geometrische Elemente unter Nutzung eines Optimierungsalgorithmus an die Oberflächenpunkte des Oberflächendatensatzes O anzupassen (anzufitten). Die in dem Oberflächendatensatz O' enthaltenen Gesamt-Qualitätskennwerte Q gehen in diesem Anpassungsprozess als Wichtungsfaktoren ein. Oberflächenpunkte, deren zugeordnete Gesamt-Qualitätskennwerte Q einen vorgegebenen Schwellwert unterschreiten, werden bei der Anpassung ignoriert.

Das Funktionsmodul 32 ist schließlich dazu eingerichtet, die Oberflächenpunkte des Oberflächendatensatzes O' mittels einer affinen Koordinatentransformation (nämlich einer parametrierbaren Kombination aus Drehung, Verschiebung und Skalierung der Koordinaten der Oberflächenpunkte) an ein oder mehrere vorgegebene Geometrieelemente oder ein vorgegebenes Modell (beispielsweise ein CAD-Modell) anzupassen. Auch bei dieser Anpassung gehen die in dem Oberflächendatensatz O' enthaltenen Gesamt-Qualitätskennwerte Q als Wichtungsfaktoren ein.

Die Erfindung wird an dem vorstehend beschriebenen Ausführungsbeispiel besonders deutlich, ist gleich wohl auf dieses aber nicht beschränkt. Vielmehr können weitere Ausführungsformen der Erfindung aus den Ansprüchen und der vorstehenden Beschreibung abgeleitet werden. Insbesondere kann Schritt 20 des anhand von Fig. 2 beschriebenen Verfahrens dahingehend modifiziert sein, dass das Computerprogramm 2 anstelle eines durch einen Suchstrahl definierten Grauwertprofils Grauwerte innerhalb einer Tangentialfläche ermittelt, die in dem jeweils betrachteten Oberflächenpunkt des Oberflächendatensatzes O an die Oberfläche angelegt wird. Als Kriterium zur Bestimmung des dem jeweiligen Oberflächenpunkt zugeordneten Gesamt-Qualitätskennwert Q bestimmt das Computerprogramm 2 in diesem Fall insbesondere Kennwerte, die für die Homogenität der ausgewählten Grauwerte und das Rauschen dieser Grauwerte charakteristisch sind.

### Bezugszeichenliste

- 1: System
- 2: Computerprogramm
- 3: Arbeitsrechner
- 4: Bildschirm
- 5: Computertomograph
- 6: Röntgenquelle
- 7: Drehtisch
- 8: Achse
- 9: Drehteller
- 10: Objekt
- 11: Röntgendetektor
- 12: Steuerrechner
- 13: Steuersoftware
- 14: Datenübertragungsstrecke
- 20-27: Schritt
- 30-32: Funktionsmodul

- V: Volumendatensatz
- R: Röntgenstrahlung
- P: Projektionsbild
- O: Oberflächendatensatz
- M: Maßangaben
- S: Abtastschrittweite
- W: Abtastweg
- G: Grauwertprofil
- D: Steigungsprofil
- MG: (maximaler) Gradient
- F: Parameter
- RS: Abweichungsmittelwert
- RF: Abweichungsmittelwert
- Q_{RS}: Qualitätskennwert
- Q_{F}: Qualitätskennwert
- Q_{RF}: Qualitätskennwert
- Q_{MG}: Qualitätskennwert
- Q: Gesamt-Qualitätskennwert
- O': (qualifizierter) Oberflächendatensatz

## Patentansprüche

1. Computerimplementiertes Verfahren zur Bestimmung der lokalen Qualität von aus einem Volumendatensatz (V) mittels einer Oberflächenbestimmungsmethode extrahierten Oberflächendaten (O), wobei der Volumendatensatz (V) eine dreidimensionale Matrix von Voxeln umfasst, denen jeweils ein Grauwert zugeordnet ist, wobei die Oberflächendaten (O) eine Anzahl von aus dem Volumendatensatz (V) extrahierten Oberflächenpunkten umfassen, und wobei verfahrensgemäß zu jedem Oberflächenpunkt
- eine Umgebung in dem Volumendatensatz (V) bestimmt wird,
- anhand des Verlaufs der Grauwerte von Voxeln aus dieser Umgebung mindestens ein Qualitätskennwert (Q) abgeleitet wird, der die Qualität des jeweils betrachteten Oberflächenpunktes charakterisiert, und
- der oder jeder Qualitätskennwert (Q) zusammen mit Koordinaten des jeweils betrachteten Oberflächenpunktes als Verfahrensresultat (O') ausgegeben wird.

2. Verfahren nach Anspruch 1,
wobei als Umgebung des jeweils betrachteten Oberflächenpunktes in dem Volumendatensatz (V) ein Suchstrahl bestimmt wird, der bezüglich der aus den Oberflächenpunkten gebildeten Oberfläche senkrecht oder bis zu einem bestimmten Winkel abweichend von der Senkrechten verläuft.

3. Verfahren nach Anspruch 2,
- wobei entlang des Suchstrahls als Kriterium für die Qualität des jeweils betrachteten Oberflächenpunktes ein Maß für die Schärfe des Grauwertprofils (G) und/oder ein Maß für den Kontrast des Grauwertprofils (G) und/oder ein Maß für das Rauschen des Grauwertprofils (G) und/oder ein Maß für die Abweichung des Grauwertprofils (G) von einem hinterlegten Referenzprofil und/oder ein Maß für die Symmetrie des Grauwertprofils (G) und/oder ein Maß für die Monotonie des Grauwertprofils (G) bestimmt werden, und
- wobei unter Berücksichtigung des oder jedes Kriteriums der Qualitätskennwert (Q) oder mindestens einer von mehreren Qualitätskennwerten abgeleitet werden.

4. Verfahren nach Anspruch 2 oder 3,
- wobei entlang des Suchstrahls mittels mindestens einer anderen Oberflächenbestimmungsmethode ein Alternativpunkt für die Oberfläche bestimmt wird,
- wobei als Kriterium für die Qualität des jeweils betrachteten Oberflächenpunktes ein Maß für die Abweichung des jeweils betrachteten Oberflächenpunktes zu dem oder jedem Alternativpunkt herangezogen wird, und
- wobei unter Berücksichtigung dieses Kriteriums der Qualitätskennwert (Q) oder mindestens einer von mehreren Qualitätskennwerten abgeleitet werden.

5. Verfahren nach einem der Ansprüche 1 bis 4,
wobei als Umgebung des jeweils betrachteten Oberflächenpunktes in dem Volumendatensatz (V) eine Tangentialfläche bestimmt wird, die die aus den Oberflächenpunkten gebildete Oberfläche in dem jeweils betrachteten Oberflächenpunkt tangiert.

6. Verfahren nach Anspruch 5,
- wobei innerhalb der Tangentialfläche als Kriterium für die Qualität des jeweils betrachteten Oberflächenpunktes ein Maß für das Rauschen und/oder ein Maß für die Homogenität der Grauwerte bestimmt werden, und
- wobei unter Berücksichtigung des oder jedes Kriteriums der Qualitätskennwert (Q) oder mindestens einer von mehreren Qualitätskennwerten abgeleitet werden.

7. Verfahren nach einem der Ansprüche 1 bis 6,
wobei die Qualitätskennwerte (Q) parallel zu der Bestimmung der Oberflächendaten (O) ermittelt werden.

8. Verfahren nach einem der Ansprüche 1 bis 7,
wobei an die Oberflächendaten (O) unter Berücksichtigung der Qualitätskennwerte (Q) mindestens ein parametrierbares geometrisches Objekt angepasst wird oder wobei die Oberflächendaten (O) durch eine affine Koordinatentransformation unter Berücksichtigung der Qualitätskennwerte (Q) an mindestens ein geometrisches Element oder einen anderen Oberflächendatensatz angepasst werden.

9. Verfahren nach einem der Ansprüche 1 bis 8,
wobei die Oberflächendaten (O) anhand der zugeordneten Qualitätskennwerte (Q) in einen modifizierten, für eine Darstellung auf einem Bildschirm (4) oder in einem Ausdruck aufbereiteten Datensatz umgewandelt werden, indem unter Berücksichtigung der Qualitätskennwerte (Q) modifizierte Farbwerte für die Oberflächenpunkte berechnet und den Oberflächenpunkten zugeordnet werden.

10. System zur Bestimmung der lokalen Qualität von aus einem Volumendatensatz (V) extrahierten Oberflächendaten (O), das zur Durchführung des Verfahrens nach einem der Ansprüche 1 bis 9 eingerichtet ist.

## Claims

1. Computer-implemented method for determining the local quality of surface data (O) extracted from a volume data set (V) by means of a surface determination method, wherein the volume data set (V) comprises a three-dimensional matrix of voxels, each of which is respectively assigned a greyscale value, wherein the surface data (O) comprise a number of surface points extracted from the volume data set (V), and wherein according to the method, for each surface point
- an environment is determined in the volume data set (V),
- on the basis of the curve of the greyscale values of voxels, at least one quality characteristic (Q) is derived from this environment, which characterises the quality of the respective examined surface point, and
- the or each quality characteristic (Q) together with coordinates of the respective examined surface point is output as the method result (O').

2. Method according to claim 1,
wherein a search beam is determined as the environment of the respective examined surface point in the volume data set (V), which search beam runs perpendicular with respect to the surface formed from the surface points, or deviates from the normal up to a certain angle.

3. Method according to claim 2,
- wherein as a criterion for the quality of the respective examined surface point a measure for the sharpness of the greyscale value profile (G) and/or a measure for the contrast of the greyscale value profile (G) and/or a measure for the noise of the greyscale value profile (G) and/or a measure for the deviation of the greyscale value profile (G) from a stored reference profile and/or a measure for the symmetry of the greyscale value profile (G) and/or a measure for the monotony of the greyscale value profile (G) can be determined along the search beam, and
- wherein the quality characteristic (Q) or at least one of several quality characteristics is/are derived taking into account the or each criterion.

4. Method according to claim 2 or 3,
- wherein an alternative point for the surface is determined along the search beam using at least one other surface determination method,
- wherein a measure of the deviation of the respective examined surface point from the or each alternative point is used as a criterion for the quality of the respective examined surface point, and
- wherein the quality characteristic (Q) or at least one of several quality characteristics is derived taking into account this criterion.

5. Method according to any one of claims 1 to 4,
wherein a tangential surface is determined as the environment of the respective examined surface point in the volume data set (V), which is tangential to the surface formed from the surface points in the respective examined surface point.

6. Method according to claim 5,
- wherein a measure for the noise and/or a measure for the homogeneity of the greyscale values is determined within the tangential surface as a criterion for the quality of the respective examined surface point, and
- wherein the quality characteristic (Q) or at least one of several quality characteristics is/are derived taking into account the or each criterion.

7. Method according to any one of claims 1 to 6,
wherein the quality characteristics (Q) are determined parallel to the determination of the surface data (O).

8. Method according to any one of claims 1 to 7,
wherein at least one parameterisable geometric object is adapted to the surface data (O) taking into account the quality characteristics (Q) or wherein the surface data (O) are adapted to at least one geometric element or another set of surface data by an affine coordinate transformation taking into account the quality characteristics (Q).

9. Method according to any one of claims 1 to 8,
wherein the surface data (O) are converted on the basis of the assigned quality characteristics (Q) into a modified data set prepared for display on a screen (4) or in a printout, by modified colour values being calculated for the surface points and being assigned to the surface points, taking into account the quality characteristics (Q).

10. System for determining the local quality of surface data (O) extracted from a volume data set (V), which is configured to carry out the method according to any one of claims 1 to 9.

## Revendications

1. Procédé mis en œuvre par ordinateur afin de définir la qualité locale de données de surface (O) extraites d'un jeu de données de volume (V) au moyen d'un procédé de définition de surface, dans lequel le jeu de données de volume (V) comprend une matrice tridimensionnelle de voxels auxquels est respectivement associée un niveau de gris, dans lequel les données de surface (O) comprennent un certain nombre de points de surface extraits du jeu de données de volume (V), et dans lequel, conformément audit procédé, pour chaque point de surface
- un environnement est défini au sein du jeu de données de volume (V),
- sur la base de l'évolution des niveaux de gris des voxels, au moins une valeur caractéristique de qualité (Q) caractérisant la qualité du point de surface respectivement considéré est dérivée dudit environnement, et
- la ou chaque valeur caractéristique de qualité (Q) est fournie en tant que résultat de procédé (O), en même temps que des coordonnées du point de surface respectivement considéré.

2. Procédé selon la revendication 1,
dans lequel un faisceau de recherche, qui s'étend perpendiculairement à la surface formée à partir des points de surface ou en présentant un certain angle d'écart par rapport aux normales, est défini comme environnement du point de surface respectivement considéré au sein du jeu de données de volume (V).

3. Procédé selon la revendication 2,
- dans lequel une mesure de la netteté du profil de niveaux de gris (G) et/ou une mesure du contraste du profil de niveaux de gris (G) et/ou une mesure du bruit du profil de niveaux de gris (G) et/ou une mesure de l'écart du profil de niveaux de gris (G) par rapport à un profil de référence stocké et/ou une mesure de la symétrie du profil de niveaux de gris (G) et/ou une mesure de la monotonie du profil de niveaux de gris (G) sont définies le long du faisceau de recherche en tant que critère pour la qualité du point de surface respectivement considéré, et
- dans lequel la valeur caractéristique de qualité (Q) ou au moins une parmi plusieurs valeurs caractéristiques de qualité est/sont dérivée(s) avec prise en considération du ou de chaque critère.

4. Procédé selon la revendication 2 ou 3,
- dans lequel un point alternatif pour la surface est défini le long du faisceau de recherche au moyen d'au moins un autre procédé de définition de surface,
- dans lequel une mesure de l'écart du point de surface respectivement considéré par rapport au ou à chaque point alternatif est utilisée comme critère pour la qualité du point de surface respectivement considéré, et
- la valeur caractéristique de qualité (Q) ou au moins une parmi plusieurs valeurs caractéristiques de qualité est/sont dérivée(s) avec prise en considération dudit critère.

5. Procédé selon l'une quelconque des revendications 1 à 4,
dans lequel une surface tangentielle tangente à la surface formée à partir des points de surface au niveau du point de surface respectivement considéré est définie comme environnement du point de surface respectivement considéré au sein du jeu de données de volume (V).

6. Procédé selon la revendication 5,
- dans lequel une mesure du bruit et/ou une mesure de l'homogénéité des niveaux de gris est/sont définie(s) au sein de la surface tangentielle comme critère pour la qualité du point de surface respectivement considéré, et
- la valeur caractéristique de qualité (Q) ou au moins une parmi plusieurs valeurs caractéristiques de qualité est/sont dérivée(s) avec prise en considération du ou de chaque critère.

7. Procédé selon l'une quelconque des revendications 1 à 6,
dans lequel les valeurs caractéristiques de qualité (Q) sont déterminées parallèlement à la définition des données de surface (O).

8. Procédé selon l'une quelconque des revendications 1 à 7,
dans lequel au moins un objet géométrique paramétrable est adapté aux données de surface (O) avec prise en compte des valeurs caractéristiques de qualité (Q), ou dans lequel les données de surface (O) sont adaptées à au moins un élément géométrique ou à un autre jeu de données de surface grâce à une transformation affine de coordonnées avec prise en compte des valeurs caractéristiques de qualité (Q).

9. Procédé selon l'une quelconque des revendications 1 à 8,
dans lequel les données de surface (O) sont converties, à l'aide des valeurs caractéristiques de qualité (Q) associées, en un jeu de données modifié, préparé pour être visualisé sur un écran (4) ou par le biais d'une impression, en calculant des niveaux de couleur modifiés pour les points de surface et en les associant auxdits points de surface, avec prise en compte des valeurs caractéristiques de qualité (Q).

10. Système de définition de la qualité locale de données de surface (O) extraites d'un jeu de données de volume (V), ledit système étant conçu pour mettre en œuvre le procédé selon l'une quelconque des revendications 1 à 9.
